# EUROPÄISCHE PATENTSCHRIFT

(11) **EP 0 490 267 B1**
(45) Veröffentlichungstag und Bekanntmachung des Hinweises auf die Patenterteilung: **20.04.1994**
(21) Anmeldenummer: 91120884.1
(22) Anmeldetag: 05.12.1991
(51) Int. Cl.: A01B 63/112

(54) **Messvorrichtung zur Bestimmung von Zugkräften**
Measuring device for determining draft loads
Dispositif de mesure pour la détermination des efforts de traction

(30) Priorität: 14.12.1990 US 627789
(43) Veröffentlichungstag der Anmeldung: 17.06.1992
(73) Patentinhaber: DEERE & COMPANY, Moline, Illinois 61265 (US)
(72) Erfinder: Spencer, Keith Louis, Cedar Falls, Iowa 50613 (US); Bowman, Dennis Aaron, Cedar Falls IA 50613-5380 (US)
(74) Vertreter: Feldmann, Bernhard

(56) Entgegenhaltungen:
- WO-A-81/00035
- DE-A- 2 255 715
- GB-A- 1 304 261
- GB-A- 2 120 074
- US-A- 3 342 274
- US-A- 3 375 876
- US-A- 4 059 159

## Beschreibung

Die Erfindung betrifft eine Meßvorrichtung zur Bestimmung der auf Koppelglieder eines Arbeitsfahrzeuges, insbesondere eines Ackerschleppers, übertragenen Zugkräfte. Bei den Koppelgliedern handelt es sich vorzugsweise um Teile einer Anbauvorrichtung des Arbeitsfahrzeuges. Dabei weist das Arbeitsfahrzeug an seinem hinteren Ende eine Rahmenstruktur auf, an der ein rechter und ein linker elastischer Seitenträger festgelegt sind. An den Seitenträgern ist je ein Koppelglied, insbesondere ein Unterlenker angelenkt. Zwischen mittleren Bereichen der sich gegenüberliegenden Seitenträger ist eine Meßvorrichtung zur Erfassung der Abstandsänderungen zwischen den Seitenträgern angeordnet. Da sich die Seitenträger durch über die Koppelglieder eingeleitete Zugkräfte verbiegen, ändert sich deren Abstand in Abhängigkeit der Zugkräfte, so daß aus den Ausgangssignalen der Meßvorrichtung Rückschlüsse auf die Größe der Zugkraft gezogen werden können.

Für die Zugkraftregelung eines landwirtschaftlichen Schleppers sind Mittel erforderlich, durch die sich die Zugkraft, die beispielsweise von einer Anhängevorrichtung auf die Unterlenker übertragen wird, messen läßt. Durch die US-PS 4,059,159, US-PS 3,342,274 und US-PS 3,375,876 sind Zugkraftmeßvorrichtungen bekannt geworden.

Insbesondere aus der US-PS 4,059,159 gehen die eingangs genannten Merkmale hervor. Gemäß dieser Konstruktionen werden die Zugkräfte an seitliche, zueinander beabstandete federnde Elemente angelegt. Die Ausbiegung der federnden Elemente wird gemessen, um ein für die Zugkraft kennzeichnendes Meßsignal zu erhalten.

Keine dieser bekannten Konstruktionen eignet sich jedoch für serienmäßig hergestellte landwirtschaftliche Schlepper, bei denen die Unterlenker mit ihren vorderen Enden an Trägern befestigt sind, die Teile des Rahmens sind und sich zwischen einem vorderen und einem hinteren Rahmenaufbau erstrecken.

Die der Erfindung zugrunde liegende Aufgabe wird darin gesehen, eine Meßvorrichtung der eingangs genannten Art anzugeben, die einfach aufgebaut und kostengünstig herstellbar ist und die empfindlich auf Zugkraftänderungen reagiert. Die Meßvorrichtung soll bei serienmäßig hergestellten landwirtschaftlichen Schleppern anwendbar sein, und es soll ein handelsüblicher Weggeber verwendbar sein.

Die Aufgabe wird ausgehend von dem Oberbegriff des Patentanspruches 1 durch dessen kennzeichnende Merkmale gelöst.

Der Schlepper hat linke und rechte zueinander beabstandete und sich in Längsrichtung des Fahrzeuges erstreckende Rahmenseitenteile, welche fest zwischen einem vorderen und einem hinteren Rahmenaufbau, bei denen es sich insbesondere um Zugpendelträger handeln kann, eingespannt sind. Die jeweils forderen Enden zweier Zugpendel sind an jeweils einem der Rahmenseitenteile angekoppelt. An den hinteren Enden der Zugpendel ist ein Anbaugerät ankoppelbar.

Die Zugkraftmeßvorrichtung enthält einen Weggeber, der auf einem Rahmenseitenteil befestigt ist. Ein Hebel ist schwenkbar in der Nähe des Weggebers auf dem Rahmenseitenteil befestigt und trägt einen Schaltstöpsel oder -dorn, der mit dem Weggeber in Wirkverbindung steht. Eine Stange ist mit ihrem ersten Ende an dem gegenüberliegenden Rahmenseitenteil befestigt und mit seinem zweiten Ende an dem Hebel angelenkt, so daß durch Zugkraftänderungen, die eine Verbiegung der Rahmenseitenteile herbeiführen, der Hebel relativ zu dem Weggebergehäuse verschoben und eine Verstellung des Weggebers verursacht wird. Der Weggeber gibt ein Signal ab, das der Zugkraft entspricht. Die Bewegung der Stange wird durch den Hebel verstärkt.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht des hinteren Bereiches eines Schleppers, durch die die Umgebung veranschaulicht wird, in der die erfindungsgemäße Meßeinrichtung angewandt werden kann,
- Fig. 2: die Seitenansicht eines hinteren Schlepperbereiches mit einer erfindungsgemäßen Zugkraftmeßvorrichtung,
- Fig. 3: die Aufsicht eines hinteren Schlepperbereiches gemäß Fig. 2 und

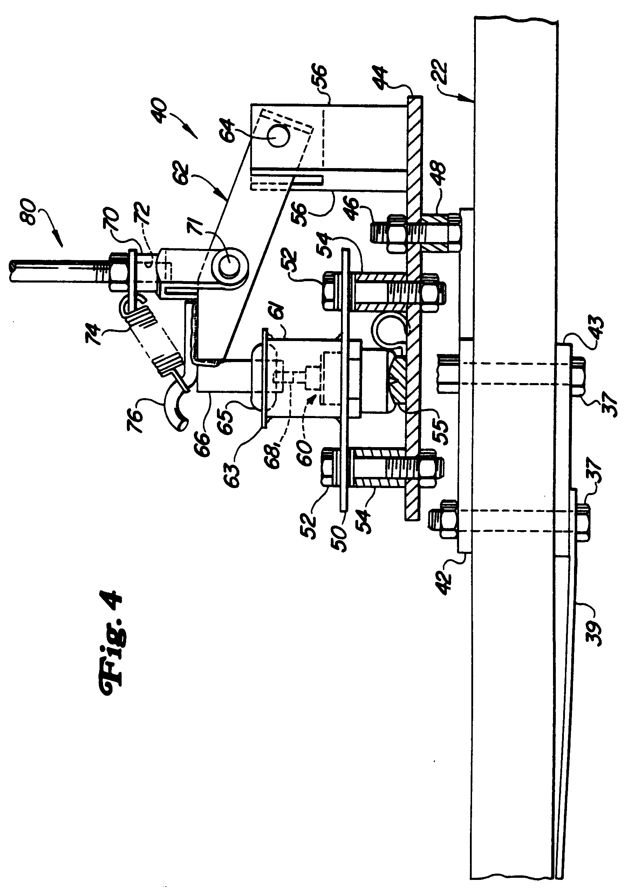

- Fig. 4: die vergrößerte Aufsicht einer erfindungsgemäßen Zugkraftmeßvorrichtung.

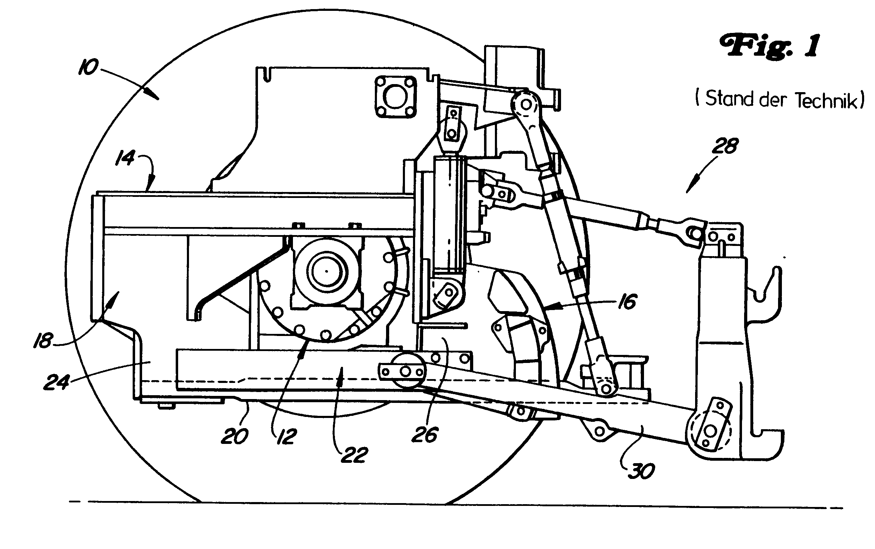

Aus Fig. 1 geht der hintere Bereich 10 eines bekannten serienmäßig herstellbaren Schleppers hervor, bei dem der erfindungsgemäße Zugkraftsensormechanismus Anwendung finden kann. Der hintere Bereich 10 enthält ein Hinterachsgehäuse 12, das einen hinteren Rahmenaufbau 14 trägt. Eine hintere Zugpendelhalterung 16 ist mit dem hinteren Ende des Rahmenaufbaus 14 und eine vordere Zugpendelhalterung 18 ist mit dem vorderen Ende des Rahmenaufbaus 14 verbunden. Ein Zugpendel 20 wird auf bekannte Art schwenkbar von der vorderen Zugpendelhalterung 18 aufgenommen und ist in der hinteren Zugpendelhalterung 16 seitlich verschiebbar.

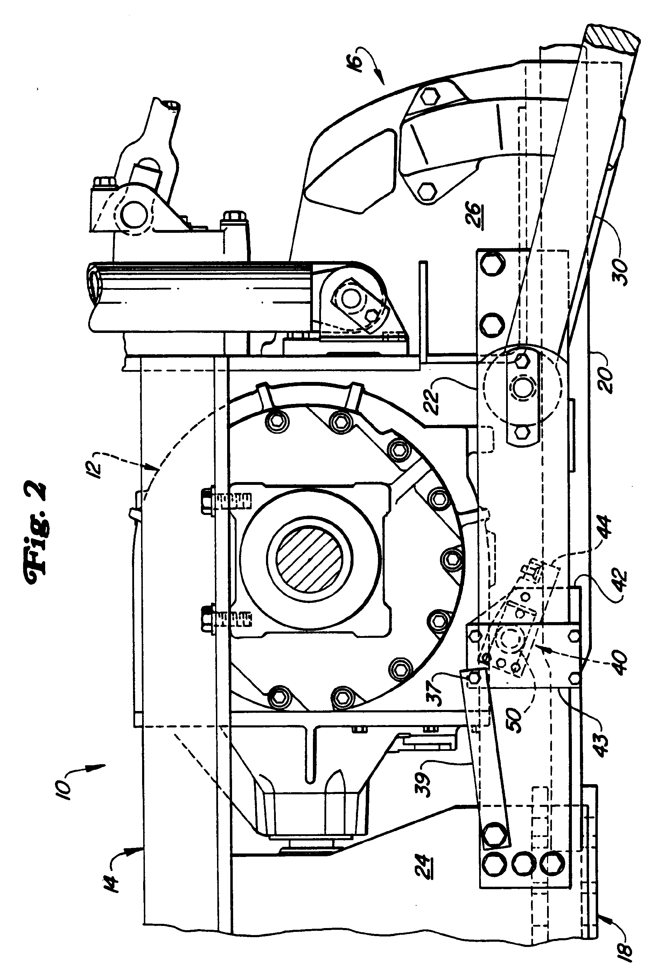

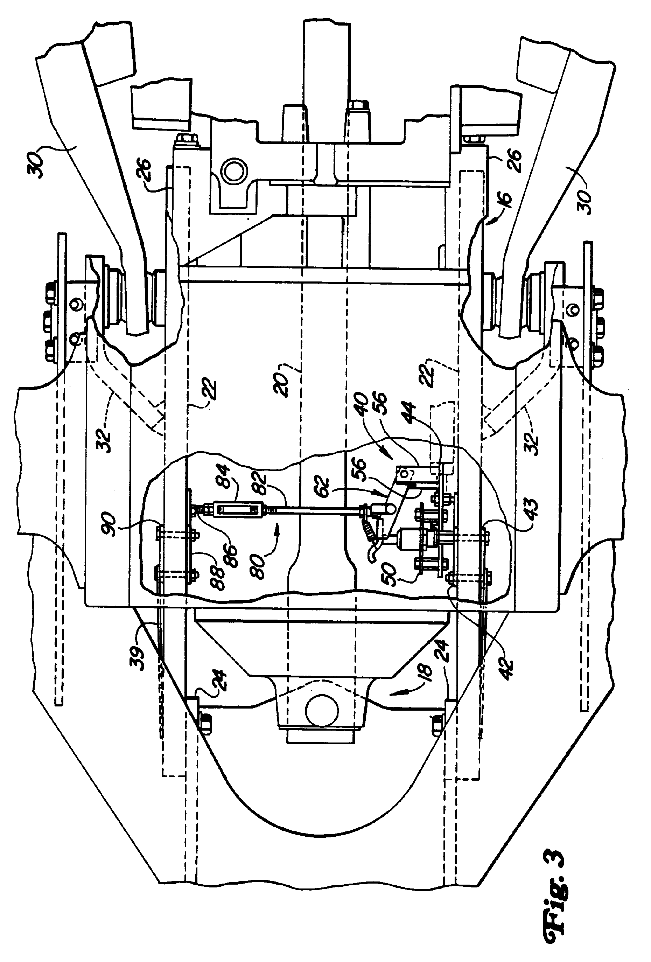

Bezugnehmend auf die Fig. 1, 2 und 3 enthält der Rahmenaufbau 14 linke und rechte Seitenträger 22. Das vordere Ende jedes Seitenträgers 22 ist starr mit einer Seitenplatte 24 der vorderen Zugpendelhalterung 18, und das hintere Ende jedes Seitenträgers 22 ist starr mit einer Seitenplatte 26 der hinteren Zugpendelhalterung 16 verschraubt.

Eine übliche Dreipunktanhängevorrichtung 28 ist ebenfalls am hinteren Ende des hinteren Rahmenaufbaus 14 befestigt. Die Anhängevorrichtung 28 umfaßt ein Paar Unterlenker 30, deren vordere Enden jeweils gelenkig an einer Konsole 32 befestigt sind. Die Konsolen 32 erstrecken sich von der Seite der Seitenträger 22 aus seitlich nach außen und sind an den Seitenträgern 22 an einer Stelle befestigt, die vor dem hinteren Ende jedes der Seitenträger 22 und vor der Forderseite der hinteren Zugpendelhalterung 16 liegt.

Gemäß der Erfindung ist zwischen die beiden Seitenträger 22 ein Zugkrafterfassungsmechanismus 40 angeordnet und an diese angekoppelt. Der Zugkrafterfassungsmechanismus 40 enthält eine innere Befestigungsplatte 42 und eine äußere Befestigungsplatte 43, welche auf sich gegenüberliegenden Seiten eines der Seitenträger 22, beispielsweise mit Hilfe von Schrauben 37 festgeklemmt sind. Eine Halteplatte 39 erstreckt sich von einer der Schrauben 37 zu einer Schraube, durch welche das vordere Ende des linken Seitenträgers 22 an der Seitenplatte 24 befestigt ist, so daß der Zugkrafterfassungsmechanismus 40 in seiner Lage längs der Fahrzeugausrichtung genau ausrichtbar ist.

Eine Grundplatte 44 ist an der inneren Befestigungsplatte 42 befestigt und wird zu dieser durch drei in den Eckpunkten eines Dreiecks angeordneten Halteanordnungen, bestehend aus Schrauben 46 und Abstandsstücken 48, von denen der besseren Übersichtlichkeit halber lediglich jeweils eine dargestellt ist, auf Abstand gehalten. Auf der zur Ackerschleppermittellinie weisenden Seite der Grundplatte 44 ist eine Sensorplatte 50 befestigt, welche durch zwei Schrauben 52 und Abstandsstücke 54 zur Grundplatte beabstandet angeordnet ist. Etwa in der Mitte zwischen den Schrauben 52 ist mit der Grundplatte 44 eine Zwischenlage oder Aufnahme 55 verschweißt. Ein Paar von Drehzapfenträgern 56 erstreckt sich von dem hinteren Ende der Grundplatte 44 aus nach innen.

Ein handelsüblicher Meßwandler 60, beispielsweise ein lineares Potentiometer, ist innerhalb einer Öffnung in der Sensorplatte 50 derart angebracht, daß ein Dorn am Ende des Meßwandlergehäuses 61 von einem Schlitz in der Oberfläche der Aufnahme 55 aufgenommen wird. Der Meßwandler 60 ist in einer Zylinderhülse 61 eingeschlossen, deren eines Ende an der Sensorplatte 50 in Dekkung mit deren Öffnung festgelegt ist. Eine Deckplatte 63 ist an dem anderen Ende der Zylinderhülse 61 befestigt. Von einer Öffnung in der Deckplatte 63 wird eine ringförmige Durchführungshülse 65 dichtend aufgenommen. Bei dem Meßwandler 60 kann es sich um ein geradliniges Potentiometer, einen geradlinig veränderbaren Meßwandler oder eine andere elektrische Einrichtung handeln, welche auf eine Ortsverschiebung anspricht. Zwischen den Abstandsstücken 54 und der Sensorplatte 50 können mehrere Zwischenlagen oder Unterlegscheiben eingefügt werden, um den Meßwandler 60 standfest gegenüber der Aufnahme 55 zu halten. Ein Ende eines Hebels 62 ist durch einen Bolzen 64 schwenkbar an den Drehzapfenträgern 56 angelenkt. An dem anderen Ende des Hebels 62 ist ein Schaltstöpsel oder Zylinderdorn 66 derart befestigt, daß der Zylinderdorn 66 gleitbar und dichtend von der Durchführungshülse 55 aufgenommen wird und mit einem Betätigungsstift 68 des Meßwandlers 60 zusammenwirkt.

Ein Gabelgelenk 70 ist durch einen Bolzen 71 drehbar an dem Hebel 62 befestigt, und zwar vorzugsweise an einer Stelle, die in etwa zweidrittel der Entfernung vom Bolzen 64 zum Zylinderdorn 66 beträgt. In dem zur Fahrzeugmitte weisenden Abschnitt des Gabelgelenkes 70 befindet sich eine Gewindebohrung 72. Zwischen dem Gabelgelenk 70 und einem an dem Hebel 62 und dem Zylinderdorn 66 befestigten Haken 76 ist eine Zugfeder 74 eingespannt. Ein in seiner Länge einstellbares Verbindungsglied 80 ist zwischen dem rechten Seitenträger 22 und dem Gabelgelenk eingespannt. Das Verbindungsglied 80 enthält eine Stange 82, deren eines Ende in die Gewindebohrung 82 des Gabelgelenkes 70 und deren anderes Ende in einen Gewindeabschnitt auf einer Seite einer Spannvorrichtung 84 eingeschraubt sind. Die andere Seite der Spannvorrichtung 84 nimmt das Gewindeende eines Stiftes 86 auf, welcher fest mit einer inneren Platte 88 verbunden ist. Die innere Platte 88 und eine äußere Platte 90 sind durch Schrauben an dem rechten Seitenträger 22 verspannt. Eine zweite Halteplatte 39 sorgt für eine genaue Lageausrichtung der Platten 88 und 90 bezüglich der Fahrzeuglängsrichtung.

Zugkräfte, die an die Unterlenker 30 angelegt werden, werden auf die Seitenträger 22 übertragen und führen dazu, daß sich die Seitenträger 22 aufeinander zu- oder voneinander wegbiegen. Diese Abstandsänderung wird durch den Hebel 62 verstärkt, und diese vervielfältigte Wegänderung wird durch den Zylinderdorn 66 auf den Meßwandler 60 übertragen. Vorzugsweise läßt sich die Länge des Verbindungsgliedes 80 durch die Spannvorrichtung so einstellen, daß ein gewünschtes Signal durch den Meßwandler 60 erzeugt wird, wenn keine Kräfte an die Unterlenker 30 angelegt sind. Ferner wird der Zugkrafterfassungsmechanismus 40 vorzugsweise so hoch wie möglich angeordnet, um der Verschmutzungsgefahr vorzubeugen. Er wird ferner so nahe wie möglich an die Stellen der Seitenträger 22 gebracht, die am stärksten zu einer seitlichen Durchbiegung neigen.

## Patentansprüche

1. Meßvorrichtung zur Bestimmung der auf Koppelglieder (30) eines Arbeitsfahrzeuges, insbesondere eines landwirtschaftlichen Schleppers, übertragenen Zugkräfte, wobei das Arbeitsfahrzeug an seinem hinteren Ende eine Rahmenstruktur aufweist, an der ein rechter und ein linker elastischer Seitenträger (22) festgelegt sind, an denen jeweils wenigstens ein Koppelglied (30), insbesondere ein Unterlenker, angelenkt ist, und wobei zwischen mittleren Bereichen der sich gegenüberliegenden Seitenträger (22) eine Meßvorrichtung zur Erfassung der Abstandsänderungen zwischen den Seitenträgern (22), die durch Zugkraftänderungen hervorgerufen werden, angeordnet ist, dadurch gekennzeichnet, daß die Rahmenstruktur eine vordere Halterung (18) und eine hintere Halterung (16) aufweist, zwischen denen sich der rechte und der linke Seitenträger (22) erstrecken, deren vordere Enden starr an der vorderen Halterung (18) und deren hintere Enden starr an der hinteren Halterung (16) festgelegt sind und in deren mittleren Bereichen je ein Koppelglied (30) angekoppelt ist, daß an einem ersten Seitenträger (22) ein Weggeber (60) und ein verschwenkbarer Hebel (62) befestigt sind, wobei das freie Ende des Hebels (62) auf das Auslöseelement (68) des Weggebers (60) einwirkt, und daß zwischen dem Hebel (62) und einem zweiten Seitenträger (22) ein Verbindungselement (82) eingespannt ist.

2. Meßvorrichtung nach Anspruch 1, dadurch gekennzeichnet, daß von dem ersten Seitenträger (22) eine zu diesem beabstandete Grundplatte (44) gehalten wird, die ihrerseits eine zu ihr beabstandete Weggebertragplatte (50) abstützt.

3. Meßvorrichtung nach Anspruch 2, dadurch gekennzeichnet, daß der Hebel (62) unmittelbar oder mittels eines Drehzapfenträgers (56) auf der Grundplatte (44) schwenkbar gelagert ist.

4. Meßvorrichtung nach Anspruch 2 oder 3, dadurch gekennzeichnet, daß der Weggeber (60) von einer Öffnung in der Weggebertragplatte (50) aufgenommen wird.

5. Meßvorrichtung nach einem der Ansprüche 1 bis 4, dadurch gekennzeichnet, daß das Verbindungselement (82) an einem mittleren Bereich des Hebels (62) zwischen der Schwenkachse (64) und dem freien Ende des Hebels (62) angreift.

6. Meßvorrichtung nach Anspruch 5, dadurch gekennzeichnet, daß der Anlenkpunkt zwischen Verbindungselement (82) und Hebel (62) näher am freien Ende liegt, als an der Schwenkachse (64).

7. Meßvorrichtung nach einem der Ansprüche 1 bis 6, dadurch gekennzeichnet, daß zwischen dem Hebel (62) und dem Verbindungselement (82) Federmittel, insbesondere eine Zugfeder (74), eingespannt sind.

8. Meßvorrichtung nach einem der Ansprüche 1 bis 7, dadurch gekennzeichnet, daß die Länge des Verbindungselements (82) einstellbar ist.

9. Meßvorrichtung nach einem der Ansprüche 1 bis 8, dadurch gekennzeichnet, daß die Koppelpunkte zwischen den Koppelgliedern (30) und den Seitenträgern (22) hinter dem Koppelpunkt, zwischen dem ersten Seitenträger (22) und dem Weggeber (60) sowie hinter dem Koppelpunkt zwischen dem zweiten Seitenträger (22) und dem Verbindungselement (82) liegen.

10. Meßvorrichtung nach einem der Ansprüche 1 bis 9, dadurch gekennzeichnet, daß die vordere und die hintere Halterung (16, 18) als Zugpendelhalterung dienen.

## Claims

1. Measuring device for determining the traction forces transmitted to coupling members (30) of a working vehicle, in particular an agricultural tractor, wherein the working vehicle comprises at its rear end a frame structure to which are fixed right and left flexible side frame members (22) to each of which is linked at least one coupling member (30), in particular a lower control arm, and wherein between central regions of the opposed side frame members (22) is arranged a measuring device for detecting the changes in distance between the side frame members (22) which are caused by changes in traction force, characterised in that the frame structure comprises a front support (18) and a rear support (16) between which extend the right and left side frame members (22) of which the front ends are rigidly fixed to the front support (18) and of which the rear ends are rigidly fixed to the rear support (16) and in the central region of each of which is coupled a coupling member (30), in that a distance sensor (60) and a pivotable lever (62) are attached to a first side frame member (22), wherein the free end of the lever (62) acts on the trigger element (68) of the distance sensor (60), and in that a connecting element (82) is mounted between the lever (62) and a second side frame member (22).

2. Measuring device according to claim 1, characterised in that there is held by the first side frame member (22) a base plate (44) which is spaced apart therefrom and which for its part supports a distance sensor carrier plate (50) spaced apart from it.

3. Measuring device according to claim 2, characterised in that the lever (62) is pivotably mounted on the base plate (44) directly or by means of a pivot pin carrier (56).

4. Measuring device according to claim 2 or 3, characterised in that the distance sensor (60) is received by an opening in the distance sensor carrier plate (50).

5. Measuring device according to any of claims 1 to 4, characterised in that the connecting element (82) engages a central region of the lever (62) between the pivot shaft (64) and the free end of the lever (62).

6. Measuring device according to claim 5, characterised in that the link point between connecting element (82) and lever (62) is closer to the free end than to the pivot shaft (64).

7. Measuring device according to any of claims 1 to 6, characterised in that between the lever (62) and the connecting element (82) are mounted spring means, in particular a tension spring (74).

8. Measuring device according to any of claims 1 to 7, characterised in that the length of the connecting element (82) is adjustable.

9. Measuring device according to any of claims 1 to 8, characterised in that the coupling points between the coupling members (30) and the side frame members (22) are located behind the coupling point between the first side frame member (22) and the distance sensor (60) as well as behind the coupling point between the second side frame member (22) and the connecting element (82).

10. Measuring device according to any of claims 1 to 9, characterised in that the front and rear supports (16, 18) serve as rise-and-fall pendant supports.

## Revendications

1. Dispositif de mesure pour la détermination des forces de traction transmises sur des organes d'accouplement (30) d'un véhicule de travail, notamment d'un tracteur agricole, le véhicule de travail présentant à son extrémité arrière une structure de châssis sur laquelle sont fixés des longerons de rive élastiques (22) droit et gauche (22), à chacun desquels est articulé au moins un organe d'accouplement (30), notamment un bras oscillant inférieur, et un dispositif de mesure pour enregistrer les modifications de la distance entre les longerons de rive (22), produites par des modifications de la force de traction, étant disposé entre des régions médianes des longerons de rive opposés (22), **caractérisé** en ce que la structure de châssis comprend une console avant (18) et une console arrière (16), entre lesquelles s'étendent les longerons de rive droit et gauche (22), dont les extrémités avant sont rigidement fixées à la console avant (18) et les extrémités arrière à la console arrière (16), et dans les régions médianes desquels est accouplé un organe d'accouplement respectif (30), en ce qu'un capteur de déplacement (60) et un levier pivotant (62) sont fixés sur un premier longeron de rive (22), l'extrémité libre du levier (62) agissant sur l'élément de déclenchement (68) du capteur de déplacement (60), et en ce qu'un élément de liaison (82) est monté avec serrage entre le levier (62) et le second longeron de rive (22).

2. Dispositif de mesure selon la revendication 1, **caractérisé** en ce qu'une plaque de montage (44) est maintenue à distance du premier longeron de rive (22) et soutient elle-même une plaque porteuse (50) de capteur de déplacement, qui en est distante.

3. Dispositif de mesure selon la revendication 2, **caractérisé** en ce que le levier (62) est monté à pivotement sur la plaque de montage (44), directement ou par l'intermédiaire d'un support de pivot (56).

4. Dispositif de mesure selon la revendication 2 ou 3, **caractérisé** en ce que le capteur de déplacement (60) est reçu par une ouverture dans la plaque porteuse (50) de capteur de déplacement.

5. Dispositif de mesure selon l'une quelconque des revendications 1 **à** 4**, caractérisé** en ce que l'élément de liaison (82) agit sur une région médiane du levier (62), entre l'axe de pivotement (64) et l'extrémité libre du levier (62).

6. Dispositif de mesure selon la revendication 5, **caractérisé** en ce que le point d'articulation entre l'élément de liaison (82) et le levier (62) se situe plus près de l'extrémité libre que de l'axe de pivotement (64).

7. Dispositif de mesure selon l'une quelconque des revendications 1 à 6, **caractérisé** en ce qu'un moyen de ressort, notamment un ressort de traction (74), est monté entre le levier (62) et l'élément de liaison (82).

8. Dispositif de mesure selon l'une quelconque des revendications 1 à 7, **caractérisé** en ce que la longueur de l'élément de liaison (82) est réglable.

9. Dispositif de mesure selon l'une quelconque des revendications 1 à 8, **caractérisé** en ce que les points d'accouplement entre les organes d'accouplement (30) et les longerons de rive (22) se situent en arrière du point d'accouplement entre le premier longeron de rive (22) et le capteur de déplacement (60), ainsi qu'en arrière du point d'accouplement entre le second longeron de rive (22) et l'élément de liaison (82).

10. Dispositif de mesure selon l'une quelconque des revendications 1 à 9, **caractérisé** en ce que les consoles avant et arrière (16, 18) servent de consoles de suspension.
